# EUROPÄISCHE PATENTSCHRIFT

(11) **EP 0 819 693 B1**
(45) Veröffentlichungstag und Bekanntmachung des Hinweises auf die Patenterteilung: **13.11.2002**
(21) Anmeldenummer: 97108426.4
(22) Anmeldetag: 24.05.1997
(51) Int. Cl.: C07F 7/18

(54) **Cyclische Silanester und deren Solvolyseprodukte sowie Verfahren zur Herstellung der cyclischen Silanester und der Solvolyseprodukte**
Cyclic silane esters and their solvolysis products and process for preparing same
Esters cycliques de silanes et produits obtenus par solvolyse de ces esters et procédé pour les préparer

(30) Priorität: 16.07.1996 DE 19628588
(43) Veröffentlichungstag der Anmeldung: 21.01.1998
(73) Patentinhaber: Degussa AG, 40474 Düsseldorf (DE)
(72) Erfinder: Rauleder, Hartwig, Dr., 79618 Rheinfelden (DE); Kötzsch, Hans-Joachim, Dr., 79618 Rheinfelden (DE); Monkiewicz, Jaroslaw, Dr., 79618 Rheinfelden (DE); Seiler, Claus-Dietrich, Dr., 79618 Rheinfelden (DE); Srebny, Hans-Günter, Dr., 31582 Nienburg (DE)

(56) Entgegenhaltungen:
- US-A- 2 983 745
- CHEMICAL ABSTRACTS, vol. 70, no. 5, 3. Februar 1969 (1969-02-03) Columbus, Ohio, US; abstract no. 20135, MIRONOV, V. F. ET AL: "Trans-silylation in silanol ethers and esters. Synthesis of oxasilacycloalkanes" XP002127605 & KHIM. GETEROTSIKL. SOEDIN. (1968), (2), 354-8 ,1968,
- CHEMICAL ABSTRACTS, vol. 102, no. 9, 4. März 1985 (1985-03-04) Columbus, Ohio, US; abstract no. 78946, BUROVA, L. N. ET AL: "Interaction of allyl alcohol derivatives with organosilicon hydrides in the presence of platinized electrodes" XP002127606 & KREMNIIORG. SOEDIN. MATER. IKH OSN., TR. SOVESHCH. KHIM. PRAKT. PRIMEN. KREMNIIORG. SOEDIN., 5TH (1984), MEETING DATE 1981, 55-7. EDITOR(S): REIKHSFEL'D, V. O. PUBLISHER: NAUKA, LENINGR. OTD., LENINGRAD, USSR. ,1984,
- CHEMICAL ABSTRACTS, vol. 87, no. 13, 26. September 1977 (1977-09-26) Columbus, Ohio, US; abstract no. 102405, ANDRIANOV, K. A. ET AL: "Synthesis and reactions of some unsaturated methylbenzylsilane derivatives" XP002127607 & DOKL. AKAD. NAUK SSSR (1977), 234(5), 1082-5 [CHEM.] ,1977,
- CHEMICAL ABSTRACTS, vol. 87, no. 19, 7. November 1977 (1977-11-07) Columbus, Ohio, US; abstract no. 152302, MOVSUMZADE, E. M.: "Hydrosilylation of some unsaturated derivatives of ethyl-p-tolyl- and methylbenzylsilane" XP002127608 & AZERB. KHIM. ZH. (1977), (2), 65-7 , 1977,
- WANG, XIANQI ET AL: "Sequential homogeneous catalysis. Catalytic formation of allylic and.beta.-keto silyl ethers from dihydrosilanes and the corresponding alcohols followed by intramolecular hydrosilation" CHEM. COMMUN. (CAMBRIDGE) (1996), (22), 2561-2562 ,1996, XP002127603
- XIN, SHIXUAN ET AL: "Reactions of silanes with allylic alcohols catalyzed by titanocene derivatives: an approach to catalytic cross dehydrocoupling/co- intramolecular hydrosilation" J. ORGANOMET. CHEM. (1995), 499(1-2), 181-91 ,1995, XP002127604
- CHEMICAL ABSTRACTS, vol. 119, no. 16, 18. Oktober 1993 (1993-10-18) Columbus, Ohio, US; abstract no. 168200, HE, M. ET AL: "Phase behavior and microstructure of polyoxyethylene trisiloxane surfactants in aqueous solution" XP002127609 & J. PHYS. CHEM. (1993), 97(34), 8820-34 , 1993,
- CHEMICAL ABSTRACTS, vol. 72, no. 4, 26. Januar 1970 (1970-01-26) Columbus, Ohio, US; abstract no. 14103, MAKI, HIROHISA ET AL: "Syntheses and properties of surfactants containing organometals. IV. Organosilicones" XP002127610 & J. AMER. OIL CHEM. SOC. (1969), 46(12), 635-8 ,1969,

## Beschreibung

Gegenstand der Erfindung sind cyclische Organosilanester und cyclische Organyloxyorganosilanester sowie Solvolyseprodukte dieser Silanester. Gegenstand der Erfindung sind weiterhin Verfahren zur Herstellung der cyclischen Organosilanester, der cyclischen Organyloxyorganosilanester und der Solvolyseprodukte dieser Silanester.

US-A 2 983 745 offenbart cyclische Silanester der Formen

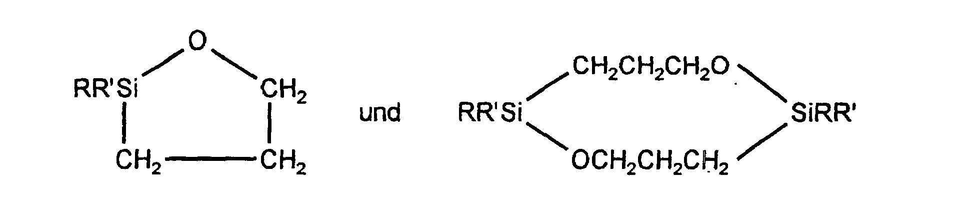

In GB 991 786 ist ein Verfahren zur Herstellung von cyclischen Silanestern, nämlich von 1-Sila-2-oxacyclopentan-Derivaten, beschrieben. So wird z.B. 1-Methyl-1-ethoxy-1-silan-2-oxacyclopentan, 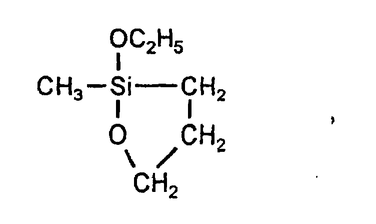 durch intramolekulare Umesterung von 3-Acetoxypropyl-methyl-diethoxysilan in Ethanol und in Gegenwart von Natriumethanolat hergestellt. Dabei entsteht aus der als Schutzgruppe fungierenden Acetylgruppe in äquimolaren Mengen Ethylacetat, das von dem gewünschten Silaoxacyclopentan abgetrennt werden muß. Das ist ein Nachteil, weil dadurch zusätzlich zu dem als. Lösungsmittel dienenden Alkohol ein das Verfahren belastender Fremdstoff eingeführt und ein zusätzlicher Reinigungsschritt erforderlich wird. Der dadurch bedingte erhöhte Aufwand wirkt einer Anwendung dieses Verfahrens im technischen Maßstab entgegen.

Entsprechend verhält es sich mit der von J. L. Speier, J. Am. Soc. 74, 1003-1010 (1952) als Schutzgruppe vorgeschlagenen Trimethylsiloxygruppe. Nach V.Chvalovsky et al., Tetrahedron 39 (1983), 1195-1197, lassen sich alpha-Trimethylsiloxy-omega-alkene in einer durch Platinverbindungen katalysierten Hydrosilylierungsreaktion mit Methylalkoxyhydrogensilanen zu offenkettigen Addukten umsetzen, die in einem Folgeschritt mit Alkoholaten intramolekular zu cyclischen Oxasilacycloalkanen mit 7 oder 8 Ringgliedern kondensiert werden können. Als Fremdstoff entsteht dabei in äquimolaren Mengen ein Trimethylalkoxysilan als zusätzliches, das Verfahren belastendes Koppelprodukt.

Es war daher erwünscht, ein Verfahren bereitzustellen, das keinen zusätzlichen Fremdstoff entstehen läßt und in einfacher Weise zu cyclischen Silanestern sowie zu deren Hydrolyseprodukten führt. Es war weiterhin erwünscht, neue Silanester und deren Solvolyseprodukte bereitzustellen, darunter solche, die die vorteilhaften Eigenschaften der Polyglykolether in Organosilanen, also in nicht hydrolysierbarer Verbindung mit Silicium, verfügbar machen.

Einer der Gegenstände der vorliegenden Erfindung ist ein Verfahren zur Herstellung von cyclischen Silanestern und deren Solvolyseprodukten, bei dem man
(A) ein Hydrogensilan der allgemeinen Formel I,

   X-SiH(R¹)₂ (I)

   in der X einen hydrolysierbaren Rest und R¹ jeweils unabhängig einen hydrolysierbaren Rest oder einen über ein C-Atom gebundenen organischen Rest R² bedeutet,
   mit einer eine Hydroxylgruppe enthaltenden Allylverbindung der allgemeinen Formel II,

   CH₂=CR³CH₂-[O(CHR³)ₓ]_{y}OH . (II)

   in der R³ Wasserstoff oder den Methylrest bedeutet, x für eine ganze Zahl von 2 bis 6 und y für 0 oder eine ganze oder gebrochene Zahl bis zu 60 steht,
   in einer Kondensationsreaktion zu einem offenkettigen, olefinisch ungesattigten Organohydrogensilanester der allgemeinen Formel III umsetzt,

   CH₂=CR³CH₂-[O(CHR³)ₓ]_{y}O-SiH(R¹)₂ . (III)

   in der R¹ und R³ sowie x und y die angegebene Bedeutung haben.
(B) diesen offenkettigen Organohydrogensilanester in einer Hydrosilylierungsreaktion zu einem cyclischen Organosilanester der allgemeinen Formel IV umsetzt. 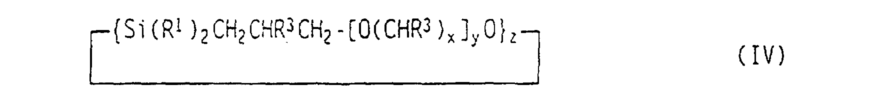 in der R¹ und R³ sowie x und y die angegeben Bedeutung haben und z eine ganze Zahl von 1 bis 6 bezeichnet.
(C) gegebenenfalls den cyclischen Organosilanester IV, sofern mindestens einer der Reste R¹ ein Halogenatom und gegebenenfalls einer der Reste R¹ ein über ein C-Atom gebundener organischer Rest R² ist, mit einem Alkohol der allgemeinen Formel R²OH, in der R² die angegebene Bedeutung hat, zu dem entsprechenden cyclischen Organyloxyorganosilanester der allgemeinen Formel V, 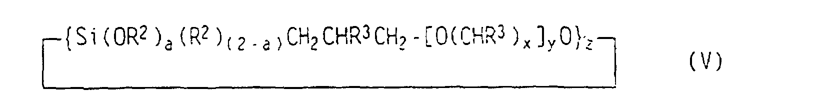 in der R² und R³ sowie x, y und z die angegebene Bedeutung haben und a für 1 oder 2 steht, umsetzt und
(D) den Organosilanester IV oder den Organyloxyorganosilanester V mit Wasser zu einem Hydrolyseprodukt der allgemeinen Formel VI,

   {-Si(O-)₍ₐ₊₁₎(R²)₍₂₋ₐ₎CH₂CHR³CH₂-[O(CHR³)ₓ]_{y}OH}ₙ (VI)

   in der R² und R³ sowie a, x und y die angegebene Bedeutung haben und n eine ganze Zahl von 2 bis 6 bezeichnet,
   oder mit einem Alkohol der allgemeinen Formel R²OH, in der R² die angegebene Bedeutung hat, zu einem Alkoholyseprodukt der allgemeinen Formel VII,

   Si(OR²)₍ₐ₊₁₎(R²)₍₂₋ₐ₎CH₂CHR³CH₂-[O(CHR³)ₓ]_{y}OH (VII)

   in der R² und R³ sowie a, x und y die angegebene Bedeutung haben,
   solvolysiert.

Die Solvolyse in der Stufe D kann also eine Hydrolyse oder eine Alkoholyse sein. Die Produkte sind dementsprechend Hydrolyseprodukte VI oder Alkoholyseprodukte VII. Die Alkoholyseprodukte VII werden erfindungsgemäß durch Zusatz von tertiären Aminen und/oder Alkoholen R²OH stabilisiert.

Ein anderer Gegenstand der Erfindung ist ein Verfahren zur Herstellung von offenkettigen Organosilanestern der allgemeinen Formel III, das die Stufe (A) des vorstehenden Verfahrens umfaßt.

Ein anderer Gegenstand der Erfindung ist ein Verfahren zur Herstellung von cyclischen Organosilanestern der allgemeinen Formel IV, das die Stufen (A) und (B) des vorstehenden Verfahrens umfaßt, mit der Maßgabe, daß mindestens einer der Reste R¹ in dem Hydrogensilan I ein Halogenatom und gegebenenfalls einer der Reste R¹ ein über ein C-Atom gebundener organischer Rest R² ist.

Ein anderer Gegenstand der Erfindung ist ein Verfahren zur Herstellung von cyclischen Organyloxyorganosilanestern der allgemeinen Formel V gemäß den Stufen (A), (B) und (C) des vorstehenden Verfahrens.

Weiterhin sind Gegenstand der Erfindung die neuen cyclischen Organosilanester der allgemeinen Formel IV. 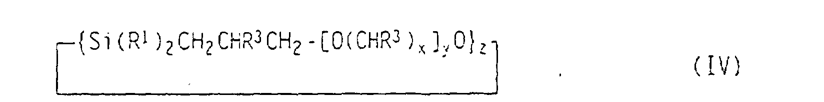 in der R¹ jeweils unabhängig einen hydrolysierbaren Rest oder einen über ein C-Atom gebundenen organischen Rest bedeutet, R³ für Wasserstoff oder den Methylrest steht, x eine ganze Zahl von 2 bis 6 bedeutet, y für eine ganze oder gebrochene Zahl von 1 bis 60 steht und z eine ganze Zahl von 1 bis 6 bezeichnet.

Ein anderer Gegenstand der Erfindung sind die Organyloxyorganylsilanester der allgemeinen Formel V 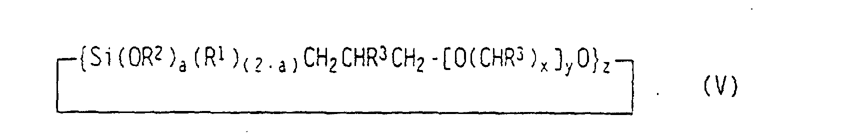 in der R¹ jeweils unabhängig einen hydrolysierbaren Rest oder einen über ein C-Atom gebundenen organischen Rest bedeutet. R² einen über ein C-Atom gebundenen organischen Rest bezeichnet, R³ für Wasserstoff oder den Methylrest steht, x eine ganze Zahl von 2 bis 6 bedeutet, y für eine ganze oder gebrochene Zahl von 1 bis 60 steht, z eine ganze Zahl von 1 bis 6 bedeutet und a für 1 oder 2 steht.

Ein weiterer Gegenstand der Erfindung sind die Hydrolyseprodukte der cyclischen Organosilanester IV und der cyclischen Organylorganosilanester V mit der allgemeinen Formel VI.

{-Si(O-)₍ₐ₊₁₎(R²)₍₂₋ₐ₎CH₂CHR³CH₂-[O(CHR³)ₓ]_{y}OH)ₙ (VI)

in der R² und R³ sowie a, x und y die angegebene Bedeutung haben und n eine ganze Zahl von 2 bis 6 bezeichnet.
sowie die Alkoholyseprodukte der cyclischen Organosilanester IV und der cyclischen Organylorganosilanester V mit der allgemeinen Formel VII.

Si(OR²)₍ₐ₊₁₎(R²)₍₂₋ₐ₎CH₂CHR³CH₂-[O(CHR³)ₓ]_{y}OH (VII)

in der R² und R³ sowie a, x und y die angegebene Bedeutung haben.

Schließlich ist Gegenstand der Erfindung die Verwendung der zuvor erwahnten offenkettigen Silanester III, der cyclischen Organosilanester IV, der cyclischen Organylorganosilanester V, der Hydrolyseprodukte VI der cyclischen Organosilanester IV oder der cyclischen Organylorganosilanester V sowie der Alkoholyseprodukte VII der cyclischen Organosilanester IV oder der cyclischen Organylorganosilanester als Vernetzungs- und Haftmittel für Werkstoffe, als Phasenvermittler und/oder als Modifizierungsmittel für Estergruppen enthaltende Polymerwerkstoffe, wie in der Folge beschrieben.

Die in den allgemeinen Formeln I bis V enthaltenen Substituenten und Subskripte haben die im folgenden aufgeführten bevorzugten Bedeutungen:
X bezeichnet bevorzugt einen Halogenidrest, insbesondere einen Chloridrest, oder einen Alkoxyrest mit 1 bis 6, insbesondere mit 1 bis 2 Kohlenstoffatomen;
R¹ bedeutet bevorzugt den, wie zuvor dargelegt, bevorzugten Substituenten X oder einen Kohlenwasserstoffrest mit 1 bis 10 Kohlenstoffatomen, insbesondere einen geradkettigen oder verzweigten Alkylrest mit 1 bis 4 Kohlenstoffatomen;
R² steht bevorzugt für einen Kohlenwasserstoffrest mit 1 bis 10 Kohlenstoffatomen, insbesondere einen geradkettigen oder verzweigten Alkylrest mit 1 bis 4 Kohlenstoffatomen;
R³ in der Gruppe (CHR³)ₓ bedeutet eine Methylgruppe oder Wasserstoff und bevorzugt Wasserstoff, wenn x für 4 bis 6 steht;
y bezeichnet bevorzugt eine ganze oder gebrochene Zahl von 1 bis 10; wenn die Allylverbindungen II durch Oxalkylierung der Allylalkohole mit Alkylenoxiden hergestellt werden, bezeichnet y Durchschnittswerte, die auch gebrochene Zahlen sein können, da die Oxalkylierung zu einer statistischen Molekulargewichtsverteilung führt:
a steht für 1 oder 2;
z bedeutet bevorzugt eine ganze Zahl von 1 bis 3, insbesondere 1, und
n bezeichnet bevorzugt eine ganze Zahl von 1 bis 4.

### Stufe (A)

Die Ausgangsstoffe für diese Stufe sind die Hydrogensilane der allgemeinen Formel I sowie die eine Hydroxylgruppe enthaltenden Allylverbindungen II. Die Hydrogensilane der allgemeinen Formel I enthalten hydrolysierbare Reste und sind in der Regel Halogensilane oder Alkoxysilane, wobei die Halogensilane und insbesondere die Chlorsilane bevorzugt werden. Die Hydrogensilane I reagieren als bifunktionale Moleküle und müssen daher neben dem Wasserstoffatom noch mindestens einen hydrolysierbaren Rest enthalten, können aber auch 2 oder 3 solche Reste aufweisen. Dementsprechend können die Hydrogensilane I noch 1 oder 2 organische, über ein C-Atom an Silicium gebundene organische Reste enthalten. Von den geeigneten Hydrogensilanen der allgemeinen Formel I seien bespielsweise genannt: Trichlorsilan, Methyldichlorsilan, Ethyldichlorsilan, n-Butyldichlorsilan, Isobutyldichlorsilan, Phenyldichlorsilan, Cyclohexyldichlorsilan, Dimethylchlorsilan, Dimethylbromsilan und Di-n-butylchlorsilan.

Die Allylverbindungen der allgemeinen Formel II mit einer darin enthaltenen Hydroxylgruppe sind Derivate des Allylalkohols oder Methallylalkohols und reagieren, wie die Silane der allgemeinen Formel I, als bifunktionale Verbindungen. Geeignete Allylverbindungen II lassen sich z.B. durch Umsetzung der genannten Alkohole mit Alkylenoxiden, insbesondere mit 1,2-Propylenoxid und/oder Ethylenoxid, herstellen. Dabei entstehen Homologengemische, die durch Destillation getrennt oder als solche verwendet werden können. Im letzteren Fall kann y, wie erwähnt, eine gebrochene Zahl bedeuten. Weiterhin sind Allylverbindungen geeignet, die durch einseitige Verätherung von Glykolen oder Polyalkylenglykolen, z.B. nach der Williamson-Synthese, hergestellt werden. Von den geeigneten Allylverbindungen seien neben Allyl- und Methallylalkohol beispielsweise Ethylenglykolmonoallylether. Ethylenglykolmonomethallylether, 1,2-Propylenglykolmonomethallylether als Isomerengemisch, 1,3-Propylenglykolmonoallylether, 1,4-Butandiolmonomethallylether, 1,6-Hexandiolmonoallylether. Diethylenglykolmonoallylether. Di-1,4-butylenglykolmonomethallyether, Triethylenglykolmonoallylether. Tri-1,4-butylenglykolmonomethallylether, Tri-1,2-propylenglykolmonoallylether als Isomerengemisch, Tetraethylenglykolmonomethallylether, Tetra-1,4-butylenglykolmonoallylether und Polyethylenglykolmonoallylether mit durchschnittlichen Molekulargewichten von 600 bis 1.200 erwähnt.

In der Stufe (A) des zuvor beschriebenen Verfahrens reagieren die beiden bifunktionalen Verbindungen I und II zu dem offenkettigen Organosilanester III. Dabei findet eine Kondensationsreaktion zwischen der Hydroxylgruppe der Allylverbindung II und dem hydrolysierbaren Rest X des Hydrogensilansilans I statt, die den olefinisch ungesättigten, offenkettigen Organohydrogensilanester der allgemeinen Formel III ergibt.

Wenn man ein halogenhaltiges Hydrogensilan I verwendet, werden in der Kondensationsreaktion molare Mengen Halogenwasserstoff, vorzugsweise Chlorwasserstoff frei. Man kann dann das Hydrogensilan I und die Allylverbindung II in etwa stöchiometrischen Mengen verwenden, sofern man ein basisches Mittel zusetzt, das den entstehenden Halogenwasserstoff wasserfrei abfängt. Geeignete derartige Mittel sind u.a. basische Ionenaustauscher und tertiäre Amine, wie Triethylamin, Tri-n-butylamin, tertiäres Dodecylamin (Tridodecylamin) und Pyridin. Man kann aber auch ohne ein solches Mittel arbeiten und den Chlorwasserstoff "verkochen", d.h. aus dem siedenden Reaktionsgemisch mit den Dämpfen der leichtsiedenden Komponente(n) austreiben. In diesem Fall empfiehlt es sich, das Hydrogensilan I in einem stöchiometrischen Überschuß anzuwenden, z.B. in der 2 bis 20-fachen stöchiometrischen Menge.

Die Kondensationsreaktion kann innerhalb eines weiten Temperaturbereichs durchgeführt werden. Dabei liegen die Temperaturen bei Mitverwendung eines basischen Stoffs zweckmäßig bei 0 bis 80°C, bei einer Arbeitsweise mit "Verkochen", d.h. ohne basisches Mittel, beim SiedePunkt des Systems. Die Ausgangsstoffe I und II können unverdünnt miteinander umgesetzt werden. Es ist aber auch möglich, ein inertes Lösungsmittel, wie Toluol oder Methylcyclohexan, mitzuverwenden. Man arbeitet in der Regel unter Atmosphärendruck. Das Reaktionsgemisch der Stufe (A) kann, gegebenenfalls nach Abtrennung des basischen Mittels, das den Chlorwasserstoff gebunden hat, durch Destillation aufgearbeitet werden, wobei zunächst etwa im Überschuß eingesetztes Hydrogensilan I abdestilliert. Die Hydrogensilanester III sind jedoch stets von so guter Qualität, daß sie ohne weitere Reinigung als Rohprodukt verwendet oder weiter umgesetzt werden können

### Stufe (B)

Der olefinisch ungesättigte, offenkettige Organohydrogensilanester III wird, wie gesagt, zweckmäßig nicht isoliert, sondern als unmittelbares Verfahrensprodukt verwendet, wie in der Folge beschrieben, oder aber in der Stufe (B) weiter umgesetzt. Da die Umsetzung unter den Bedingungen des Verfahrens nach der Erfindung intramolekular abläuft, erhält man durch Hydrosilylierung den cyclischen Organosilanester IV. Bei kurzen Ketten (z.B. y = 0), die einen 5- oder 6-gliedrigen Ring ergeben, ist diese erwünschte intramolekulare Hydrosilylierung überraschenderweise bei weitem bevorzugt. Bei längeren Ketten (z.B. y > 2) können als Nebenprodukte auch cyclische Organosilanester IV entstehen, in denen z > 1 ist. Ohne die erfindungsgemäßen Maßnahmen entstehen dagegen ausschließlich Polymere.

Die Hydrosilylierungsreaktion wird zweckmäßig in Gegenwart eines inerten Lösungsmittels als Verdünnungsmittel durchgeführt. Das Lösungsmittel kann schon teilweise von der vorhergehenden Kondensationsreaktion der Stufe (A) her vorhanden sein. Man führt die Reaktion der Stufe (B) in Gegenwart eines Katalysators, vorzugsweise einer katalytisch wirksamen Menge einer Platinverbindung als Hydrosilylierungskatalysator durch Geeignete Platinverbindungen sind z.B. Platin(II)-acetat, Platin(II)-acetylacetonat, Hexachloroplatin(II)-säure sowie deren Komplexe mit Divinyltetramethyldisiloxan oder mit Ketonen. Man setzt die Platinverbindung zweckmäßig in Mengen ein, die 10⁻³ bis 10⁻⁶ Mol Platin je Mol offenkettigen Silanester III entsprechen. Die Hydrositylierungsreaktion der Stufe (B) wird im allgemeinen bei Temperaturen oberhalb von 45°C, vorteilhaft zwischen 60 und 130°C, durchgeführt. Zweckmaßig arbeitet man bei der Siedetemperatur des Lösungsmittels und fügt den offenkettigen Silanester III nach und nach der siedenden Lösung der Platinverbindung in dem inerten Lösungsmittel zu, wobei gegebenenfalls überschussiges Hydrogensilan I spontan abdestilliert. Dadurch wird uberraschenderweise die cyclisierende Hydrosilylierung begünstigt. Der cyclische Organosilanester IV läßt sich im allgemeinen durch Destillation unter vermindertem Druck isolieren, nachdem man zuvor die leichtsiedenden Bestandteile des Reaktionsgemisches abgetrennt hat, sofern sich die Destillation nicht verbietet, z.B. bei cyclischen Organosilanestern IV mit höheren Molekulargewichten. Diese sind aber auch als Rohprodukt ohne weiteres zu verwenden, wie in der Folge beschrieben, oder weiter umzusetzen.

### Stufe (C)

Wenn man als Ausgangsstoff für die Stufe (A) ein Hydrogensilan I einsetzt, das mehr als ein Halogenatom aufweist, so enthält der cyclische Organosilanester IV der Stufe (B) noch ein oder zwei hydrolysierbare Halogenatome. Er läßt sich im Regelfall unmittelbar für die in der Folge beschriebenen Anwendungen einsetzen. Man kann aber auch, wie zuvor erwähnt, den Organosilanester IV in der Stufe (C) in einer weiteren Kondensationsreaktion mit einer stöchiometrischen Menge eines Alkohols der Formel R²OH umsetzen, wodurch eine oder zwei weitere Silanesterfunktionen in das Molekül eingeführt werden und der Organyloxyorganosilanester V entsteht. Dieser ist wiederum, wie der Organosilanester IV, empfindlich gegen Solvolyse unter Ringoffnung.

Für die Umsetzung in der Stufe (C) kann man ebenfalls, wie in der Kondensationsreaktion der Stufe (A), ein basisches Mittel zusetzen, um den entstehenden Halogenwasserstoff wasserfrei abzufangen. Dazu eignen sich die zuvor beschriebenen basischen Mittel. Alternativ kann man die Kondensationsreaktion auch ohne basisches Mittel durchführen, wobei man den Alkohol zweckmäßig im stöchiometrischen Überschuß einsetzt und den Chlorwasserstoff "verkocht", gegebenenfalls in Gegenwart eines Lösungsmittels. Hinsichtlich der Temperaturen gelten die Ausführungen zur Kondensationsreaktion der Stufe (A). Auch die Kondensationsreaktion der Stufe (C) wird im allgemeinen unter Atmosphärendruck durchgeführt.

### Stufe (D)

Die Solvolyse in der Stufe D kann, wie zuvor erwähnt, eine Hydrolyse oder eine Alkoholyse sein. Die Produkte sind daher Hydrolyseprodukte VI oder Alkoholyseprodukte VII. Dabei ist es für die Natur der Solvolyseprodukte unerheblich, ob in den cyclischen Silanestern IV und V z = 1 oder >1 ist. Wenn diese cyclischen Silanester Substituenten R¹ aufweisen, die über ein C-Atom gebundene organische Reste R² sind, bleiben diese bei der Hydrolyse und bei der Alkoholyse als solche erhalten.

Soweit die cyclischen Silanester IV und V als Substituenten R¹ hydrolysierbare Reste enthalten, entstehen daraus bei der Hydrolyse zunächst Silanolgruppen. Weiterhin entstehen infolge der Ringöffnung eine endständige alkoholische Hydroxylgruppe und eine Silanolgruppe. Da die Silanolgruppen zur Kondensation unter Ausbildung von Siloxanstrukturen -Si-O-Si- neigen, sind die Hydrolyseprodukte VI, je nach dem Wert von n, höhermolekular. In der Formel VI sind die Siloxanstrukturen durch das Symbol -Si(O-) angedeutet. Welche Art von Kondensationsprodukten entsteht, hängt weitgehend von den Substitutionsverhältnissen am Siliciumatom ab. Enthalten die Silanester IV und V neben der cyclischen Estergruppierung keinen weiteren hydrolysierbaren Rest, so entstehen Disiloxane. Ist noch ein weiterer hydrolysierbarer Rest vorhanden, so entstehen bevorzugt Verbindungen mit Siloxanstrukturen, in denen drei und mehr Si-O-Bausteine einen Ring mit 6, 8, 10 usw. Ringgliedern und alternierender Folge von Si- und O-Atomen oder offene, lineare Ketten bilden, wobei die anderen Valenzen der Si-Atome mit organischen Resten abgesättigt sind. Unter den cyclischen Siloxanen werden diejemigen mit 3 bis 8 Siliciumatomen im Ring bevorzugt. Enthalten die Silanester IV und V noch zwei weitere hydrolysierbare Reste, so entstehen bei der Hydrolyse vernetzte. Siloxan-reiche Strukturen mit kovalent an Silicium gebundenen organischen Resten, die hochviskose Flüssigkeiten sind oder eine zähe, gummiartige Konsistenz besitzen.

Die Hydrolyse kann durchgeführt werden, indem man den Silanester IV oder V nach und nach in überschüssiges Wasser eintragt. Es ist zweckmäßig, den Silanester in einem inerten, mit Wasser nicht mischbaren Lösungsmittel gelöst anzuwenden und für eine gute Durchmischung der wässerigen und der organischen Phase zu sorgen. Man kann bei Raumtemperatur arbeiten; in manchen Fällen ist es zweckmäßig, das Reaktionsgemisch zur Vervollständigung der Hydrolyse einige Zeit zu erhitzen, z.B. bis zum Rückfluß Wenn der Silanester IV noch hydrolysierbares Halogen enthalt, ist es möglich, dem Reaktionsgemisch ein Halogenwasserstoff bindendes Mittel zuzusetzen. Als solche eignen sich die zuvor für diesen Zweck beschriebenen Mittel und vorzugsweise Alkalicarbonate und -hydrogencarbonate. Statt dessen kann man aber auch den Halogenwasserstoff durch Verkochen aus dem Reaktionsgemisch entfernen. Nach Beendigung der Hydrolyse kann man das Hydrolysat in einem inerten, mit Wasser nicht mischbaren Lösungsmittel aufnehmen, das Lösungsmittel verdampfen und das Hydrolysat als Rückstand gewinnen.

Man kann die Alkoholyse in der Stufe D als die Vollendung der Alkoholysereaktion ansehen, die in der fakultativen Stufe C in einem ersten Teilschritt von den cyclischen Organosilanestern IV, soweit sie als Substituenten R¹ Halogenatome enthalten, zu den Organyloxyorganosilanestern V führt. Dieser Teilschritt ist möglich, weil der Austausch der Halogenatome gegen Reste R²O leichter erfolgt als die Ringöffnung durch Alkoholyse. Natürlich sind auch solche Organosilanester IV der Alkoholyse zugänglich, die keine Halogenatome enthalten und daher keine Organyloxyorganosilanester V bilden können. Bei der Alkoholyse bleiben in den cyclischen Silanestern IV und V als Substituenten R¹vorhandene Organyloxyreste, wie Alkoxyreste, erhalten. Halogenatome werden gegen Alkoxyreste ausgetauscht. Bei der Ringöffnung entstehen eine endständige alkoholische Hydroxylgruppe und am Siliciumatom eine Alkoxygruppe. Die omega-Hydroxyorganyl-alkoxysilane werden durch die allgemeine Formel VII in monomerer Form wiedergegeben. Sie können aber auch intermolekular zu offenkettigen Oligomeren oder Polymeren kondensieren. Diese Kondensationsreaktion kann durch Stabilisierungsmittel verhindert oder zurückgedrängt werden. Als Stabilisierungsmittel eignen sich u.a. die erwähnten Alkohole der allgemeinen Formel R²OH in Mengen bis zu 35 Gew.-%. z.B. Alkanole mit 1 bis 4 Kohlenstoffatomen, und/oder insbesondere geringe Mengen, wie 0,1 Gew.-%, tertiäre Amine wie Trialkylamine mit bis zu 48 Kohlenstoffatomen, z B. tertiäres Dodecylamin. Die oligomeren oder polymeren Ester lassen sich durch Behandlung mit einem Alkohol wieder in die monomere Form umwandeln.

Die Alkoholyse kann bewirkt werden, indem man den Silanester IV oder V, gegebenenfalls in einem inerten Lösungsmittel gelöst, nach und nach dem Alkohol zusetzt. Auch die umgekehrte Reihenfolge ist möglich. Man kann wiederum bei Raumtemperatur arbeiten und das Reaktionsgemisch zur Vervollstandigung der Reaktion einige Zeit erhitzen, z.B. bis zum Sieden unter Rückfluß. Wie bei der Hydrolyse kann man dem Reaktionsgemisch ein Halogenwasserstoff bindendes Mittel zusetzen, wenn der Silanester IV noch hydrolysierbares Halogen enthält, oder aber den Halogenwasserstoff durch Verkochen entfernen.

Wenn der Silanester IV noch ein bzw. zwei hydrolysierbare Halogenatome enthält, konkurrieren die Kondensationsreaktion, in der Halogenwasserstoff gebildet und das Halogen gegen einen Organyloxyrest ausgetauscht wird (d.h. die obige Stufe B), und die Solvolyse unter Ringoffnung miteinander. Dabei ist die erstgenannte Reaktion bevorzugt. Dadurch ist es möglich, mit stöchiometrischen Mengen (d.h. 1 bzw. 2 Mol) Alkohol cyclische Organyloxyorganosilanester V herzustellen, wie zuvor unter Stufe B beschrieben. Diese sind aber ihrerseits gegen Solvolyse empfindlich. Wenn man also einen cyclischen Organyloxyorganosilanester V einer Hydrolyse oder einer Alkoholyse unterwirft, erhält man dasselbe Produkt, das bei der Umsetzung von hydrolysierbares Halogen enthaltenden cyclischen Organosilanestern IV mit überschüssigen (d.h. 1 bzw. 2 Mol überschreitenden) Mengen Wasser oder Alkohol entsteht. Trotzdem ist es in manchen Fällen sinnvoll, hydrolysierbares Halogen enthaltende cyclischen Organylsilanester IV zuerst gemäß Stufe C in Organyloxyorganylsilanester V umzuwandeln und diese in der Stufe D zu solvolysieren. Das gilt z.B. wenn die Solvolyse bei der Verwendung der Verfahrensprodukte auf Substraten erfolgt, die gegen Halogenwasserstoff empfindlich sind und Halogenwasserstoff bindende Mittel dem beabsichtigten Verwendungszweck abträglich sind oder gar zuwiderlaufen.

### Verwendung der Verfahrensprodukte

Die offenkettigen Organosilanester III, die cyclischen Organosilanester IV, die ebenfalls cyclischen Organyloxyorganosilanester V sowie die Solvolyseprodukte VI und VII dieser beiden cyclischen Silanester eignen sich als Vernetzungs- bzw. Haftmittel, insbesondere für Epoxidharze. Polyoxyalkylen-Gruppen enthaltende Werkstoffe (wie Lycra® und Hytrel®). Polyurethane sowie Estergruppen enthaltende Polymere. Sie erzeugen, zweckmäßig in Form von Lösungen aufgebracht, feste Bindungen zwischen zwei gleichen oder verschiedenen der genannten Polymeren untereinander sowie zwischen Polymeren und metallischen oder mineralischen Substraten. Diese Substrate können flächig oder feinteilig, also Fullstoffe sein. Von den geeigneten Füllstoffen seien z B. Tonerdemineralien, Silikatmineralien, Kieselsäure in ihren verschiedenen Formen, Calciumcarbonat, Emaillen, alle Formen von Glas (wie Glasfasern, Glaskugeln oder Zellglas), Ruße und Metallpulver genannt

Weiterhin sind die genannten Verfahrensprodukte als Phasenvermittler brauchbar, z.B. zwischen Asphalt und Polyalkylenen oder Polyvinylchlorid und Siliconen.

Schließlich eignen sich die Solvolyseprodukte VI und VII, die freie organisch gebundene Hydroxylgruppen enthalten, zur Modifizierung von Estergruppen enthaltenden organischen Polymerwerkstoffen durch Umesterung, gegebenenfalls in Gegenwart von Umesterungskatalysatoren. Werden solche durch Umesterung modifizierten Werkstoffe mit Wasser oder Dampf behandelt, so tritt an den eingeführten Silan-Gruppierungen Vernetzung ein. Geeignete Grundpolymere mit Estergruppen sind z.B. Homo- oder Copolymere der Acrylsäure-, Methacrylsäure- und Maleinsäureester.

Die folgenden Beispiele sollen die Erfindung erläutern nicht aber ihren Umfang begrenzen, wie er in den Patentansprüchen niedergelegt ist.

### Beispiel 1

### (a) 1-Sila-2-oxa-1-chlor-1,4-dimethylcyclopentan

In einem 2-l-Rührreaktor mit Temperaturregelung mit Temperaturmessung in der flüssigen Phase, einem mit seinem Auslauf bis in die flüssige Phase reichenden Dosiertrichter und einem bei -80°C arbeitenden Rückflußkühler mit Ableitung für gasförmigen Chlorwasserstoff wurden 760 g (6.6 Mol) Methylhydrogendichlorsilan vorgelegt und zum Sieden erhitzt. Innerhalb von 30 Minuten wurden 216 g (3 Mol) Methallylalkohol zudosiert und innerhalb von 30 Minuten die entstandenen 3 Mol Chlorwasserstoff vollständig verkocht. Die resultierende Losung von ca. 450 g (3 Mol) Methylhydrogenmethallyloxychlorsilan in ca. 400 g Methylhydrogendichlorsilan wurde innerhalb von 45 Minuten in einen anderen 2 l-Rührreakror dosiert, der mit einer Füllkorperkolonne mit 9 Boden unter einem Destillationskopf versehen war, in dem 1 l siedendes Toluol vorgelegt war, das 1 ml einer n/100 Lösung von Hexachloroplatin(II)-säure in Aceton enthielt. Dabei destillierte das überschüssige Methylhydrogendichlorsilan spontan ab. Das Reaktionsgemisch wurde 1 Stunde bei Siedetemperatur nachgerührt. Es entstand eine Lösung von ca. 440 g Zielprodukt in Toluol.

### (b) 1-Sila-2-oxa-1-sek.-butoxy-1-4-dimethylcyclopentan

In einem 4 l-Rührreaktor mit Temperaturregelung und Rückflußkühler wurde die in der Stufe (a) hergestellte Lösung des Zielprodukts in Toluol vorgelegt und auf 70°C erhitzt. Innerhalb einer Stunde wurde eine Lösung von 225 g (3 Mol) sek.-Butanol und 245 g (3,1 Mol) Pyridin in 800 ml Toluol zugetropft. Dabei fiel Pyridinhydrochlorid aus. Das Gemisch wurde noch eine Stunde gerührt und dann auf 0°C abgekühlt. Das Pyridinhydrochlorid wurde abfiltriert und 4 mal mit jeweils 200 ml eiskaltem Toluol gewaschen. Die Destillation der vereinigten Toluollösungen ergab 408 g (72 %d. Th.) Zielprodukt vom Kp. 63 bis 68°C bei 2 mbar.

### (c) 3-Hydroxyisobutyl-methylsiloxan-oligomer als Hydrolysat

Eine gemäß der Stufe (a) hergestellte Lösung des Zielprodukts in Toluol wurde bei Raumtemperatur unter Rühren und Kühlen innerhalb einer Stunde in eine Suspension von 260 g (3,1 Mol) Natriumhydrogencarbonat in 600 ml Wasser eingebracht. Es bildeten sich unier Gasentwicklung zwei Phasen. Die untere Phase bestand aus einer ca. 30 %igen Kochsalzlösung. Die obere Phase enthielt das Zielprodukt in Toluol gelost. Nach dem Abziehen des Toluols im Vakuum verblieben 378 g eines viskosen Ols als Zielprodukt.

### Beispiel 2

### (a) 1-Sila-2,5-dioxa-1-chlor-1,3(4),7-trimethylcyclooctan

Analog Beispiel 1(a) wurden 195 g (1.5 Mol) eines Gemisches aus 1-Methallyl-2-propanol und 2-Methallyl-1-propanol (hergestellt aus Methallylchlorid und 1,2-Propandiol nach der Williamson-Synthese in an sich bekannter Weise) mit 380 g (3.3 Mol) siedendem Methythydrogendichlorsilan verestert. Die Lösung, die das resultierende Monoester-Gemisch enthielt, wurde analog der in Beispiel 1(a) beschriebenen Verfahrensweise cyclisierend zu dem Zielprodukt in Toluol hydrosilyliert.

### (b) 1-Sila-2,5-dioxa-1-ethoxy-1,3(4),7-trimethylcyclooctan

Analog Beispiel 1(b) wurde der Lösung des Zielprodukts der Stufe 2(a) bei 50°C eine Losung von 70 g (1.5 Mol) Ethanol in 126 g (1.6 Mol) Pyridin zugesetzt. Es wurde weiter verfahren wie in Beispiel 1(b). Man erhielt 223 g (68 %d Th.) Zielprodukt vom Kp 137 bis 148°C / 1 mbar

### (c) 3-(2 bzw. 1-Hydroxy-1 bzw. 2-propoxy)-isobutyl-methylsiloxan-Oligomer als Hydrolyseprodukt

Das in der Stufe 2(a) hergestellte Produkt wurde bei Raumtemperatur unter Rühren und Kühlen innerhalb einer Stunde in eine Suspension von 130 g (1,55 Mol) Natriumhydrogencarbonat in 300 ml Wasser eindosiert. Es bildeten sich unter Gasentwicklung zwei Phasen. Die obere Phase wurde mit Natriumsulfat getrocknet. Nach dem Abziehen des Toluols im Vakuum verblieben 252 g Zielprodukt als schwachgelbes viskoses Öl.

### Beispiel 3

### (a) 1-Sila-2-oxa-1.1-dichlorcyclopentan

In einem 2-l-Rührreaktor mit Temperaturregelung mit Temperaturmessung in der flüssigen Phase, einem mit seinem Auslauf bis in die flüssige Phase reichenden Dosiertrichter und einem bei -80°C arbeitenden Rückflußkühler mit Ableitung für gasförmigen Chlorwasserstoff wurden 1.110 g (8.2 Mol) Trichlorsilan vorgelegt und zum Sieden erhitzt. Innerhalb 20 Minuten wurden 116 g (2 Mol) Allylalkohol zudosiert, und innerhalb weiterer 20 Minuten wurde der gebildete Chlorwasserstoff vollständig verkocht. Die resultierende Lösung von ca. 310 g Hydrogenallyloxydichlorsilan in ca. 840 g Trichlorsilan wurde innerhalb 45 Minuten in einen 2 l-Ruhrreaktor dosiert, der mit einer Füllkörperkolonne mit 9 Boden unter einem Destillationskopf mit Flüssigkeitsteiler versehen war, in dem 500 ml siedendes Methylcyclohexan vorgelegt waren, die 0.5 ml einer n/100 Losung von Hexachloroplatin(II)-saure in Aceton enthielten. Dabei destillierte das überschüssige Trichlorsilan (ca. 840 g) spontan ab. Das Reaktionsgemisch wurde eine Stunde nachgerührt. Es resultierte eine Lösung von ca. 300 g Zielprodukt in Methylcyclohexan.

### (b) 3-Hydroxypropyltriethoxysilan als Ethanolyseprodukt

In die in der Stufe 3(a) hergestellte Losung des Zielprodukts, die sich in einem 2 l-Rührreaktor mit bei -80°C arbeitendem Rückflußkühler. Ableitung für Chlorwasserstoff. Temperaturregelung in der Flussigphase des Reaktors und einem mit seinem Auslauf in die flüssige Phase eintauchendem Dosiertrichter befand, wurden bei 58°C innerhalb 20 Minuten 184 g (4 Mol) Ethanol eindosiert. Das Gemisch wurde zum Sieden erhitzt und dadurch der entstehende Chlorwasserstoff (ca. 2 Mol) verkocht. Das Reaktionsgemisch wurde abgekühlt und innerhalb 30 Minuten in eine Losung von 136 g (2 Mol) Natriumethanolat in Ethanol eingeleitet, wobei Natriumchlorid ausfiel. Die siedende Lösung wurde mit ethanolischer Natriumethanolat-Lösung tropfenweise gegen pH-Papier nachneutralisiert und dann auf 0°C abgekühlt. Das Natriumchlorid wurde abfiltrierte und 4 mal mit jeweils 50 ml eiskaltem Methylcyclohexan gewaschen. Die Rohlösung des Zielprodukts wurde über Aktivkohle filtriert. Nach Zugabe von 0,5 ml tertiärem Dodecylamin (Tridodecylamin) als Stabilisierungsmittel wurden überschüssiges Ethanol und Methylcyclohexan im Vakuum abgezogen, wobei eine Produkttemperatur von 40°C nicht überschritten wurde. Es verblieben 392 g Zielprodukt (88 %d. Th.) als schwachgelbes viskoses Öl. Das Produkt wurde durch Zugabe von 47 g Ethanol zusätzlich stabilisiert.

Ohne Zugabe von 0.4 g tertiärem Dodecylamin wurde bei der destillativen Aufarbeitung des Rohprodukts ein gummiartig vernetztes Produkt erhalten, das sich beim Erhitzen mit Methanol oder Ethanol wieder verflussigte.

### Beispiel 4

### (a) 1-Sila-2,5,8,11,14-pentaoxa-1,1-dichlorcycloheptadecan

Analog dem Beispiel 3(a) wurden 235 g (1 Mol) Tetraethylenglykolmonoallylether (hergestellt aus Allylchlorid und Tetraethylenglykol nach der Williamson-Synthese in an sich bekannter Weise) innerhalb 30 Minuten mit 814 g (6 Mol) Trichlorsilan zum entsprechenden Hydrogendichlorsilanmonoester umgesetzt und anschließend cyclisierend zu ca. 330 g Zielprodukt, gelöst in Methylcyclohexan, hydrosilyliert.

### (b) 3-(2-Hydroxy-omega-tetraethoxy)propyltrimethoxysilan als Methanolyseprodukt

Die in der Stufe (a) hergestellte Lösung des Zielprodukts wurde bei Raumtemperatur unter Kühlung in eine in einem 2 l-Rührreaktor vorgelegte 30 Gew.%-ige Lösung von Natriummethylat in Methanol eingerührt. wobei Natriumchlorid ausfiel. Danach wurde das Reaktionsgemisth bei leichtem Sieden mit methanolischer Natriummethylat-Lösung tropfenweise gegen pH-Papier nachneutralisiert. Nach der Aufarbeitung analog Beispiel 3(b) wurden der Lösung des Zielprodukts 0.3 g tertiäres Dodecylamin zugesetzt, und Methanol sowie Methylcyclohexan wurden im Vakuum abgezogen, wobei eine Produkttemperatur von 40°C nicht überschritten wurde. Es verblieben 312 g (87 %d. Th.) Zielprodukt als schwachgelbes viskoses Öl, das durch Zusatz von 15 g Methanol zusätzlich stabilisiert wurde.

### Beispiel 5

### (a) Cyclisierungsprodukt aus Tributylenglycol-1,4-monoallylether und Hydrogenmethyldichlorsilan

138 g (0,5 Mol) Tributylenglykol-1,4-monoallylether (hergestellt aus Allylchlorid und Tributylenglykol nach der Williamson-Synthese in an sich bekannter Weise) wurden mittels 100 ml Methylcyclohexan verflüssigt, und die Lösung wurde analog dem Beispiel 3(a) mit 345 g (3 Mol) Methyldichlorsilan zum entsprechenden Hydrogenmethylchlorsilanester umgesetzt, der anschließend cyclisierend zu ca. 170 g Zielprodukt, gelost in Methylcyclohexan, hydrosilyliert wurde.

### (b) 3-(4-Hydroxy-omega-tri-1,4-butylenoxy)propylmethylsiloxan-Oligomer als Hydrolyseprodukt

Die in der Stufe (a) hergestellte Lösung des Cyclisierungsprodukts wurde Analog dem Beispiel 1(c) mit 52 g Natriumhydrogencarbonat in 200 ml Wasser hydrolysiert, und die Reaktion wurde durch 2-stündiges Erhitzen zum Sieden vervollständigt. Nach der Aufarbeitung verblieben 160 g (95 %d. Th.) Zielprodukt als hellgelbes, bei Raumtemperatur langsam erstarrendes Öl.

### Beispiel 6

### (a) Cyclisierungsprodukt aus Polyethylenglykolmonoallylether und Trichlorsilan

94 g (0.1 Mol) Polyethylenglykolmonoallylether (mittleres Molekulargewicht 940, mittlerer Polymerisationsgrad etwa 20; hergestellt durch Ethoxylierung von Ethylenglykolmonoallylether in an sich bekannter Weise) wurden mittels 100 ml Toluol verflüssigt, und die Lösung wurde analog dem Beispiel 3(a) mit 270 g (2 Mol) Trichlorsilan zum entsprechenden Hydrogendichlorsilanester umgesetzt, der anschließend mit 300 ml Toluol, die 0,7 ml Katalysator enthielten, zu ca. 100 g Zielprodukt, gelöst in Toluol, hydrosilyliert wurde.

### (b) Polyethylenglykol-mono-(3-trimethoxysilyl)propylether als Methanolyseprodukt

Die gemäß Beispiel 6(a) hergestellte Lösung des Zielprodukts wurde analog dem Beispiel 4(b) mit 5.4 g (0.1 Mol) Natriummethylat in 50 ml Methanol verestert. Das ausgefallene Natriumchlorid wurde abfiltriert und zweimal mit jeweils 30 ml eiskaltem Methanol gewaschen. Die Lösung wurde nach Zugabe von 0,1 ml tertiärem Dodecylamin im Vakuum von leichtflüchtigen Stoffen befreit, wobei die Produkttemperatur 54°C nicht überstieg. Es verblieben 98 g (92 %d. Th.) Zielprodukt als blaßgelbes hochviskoses Öl, das bei Raumtemperatur langsam erstarrte. Der Si-Gehalt betrug 2.8%. Das Produkt konnte durch Zugabe von 2 g Methanol zusätzlich stabilisiert werden.

## Patentansprüche

1. Verfahren zur Herstellung von cyclischen Silanestern und deren Solvolyseprodukten, **dadurch gekennzeichnet, daß** man
(A) ein Hydrogensilan der allgemeinen Formel I,
H-SiX(R¹)₂ . (I)
in der X einen hydrolysierbaren Rest und R¹ jeweils unabhängig einen hydrolysierbaren Rest oder einen über ein C-Atom gebundenen organischen Rest R² bedeutet,
mit einer eine Hydroxylgruppe enthaltenden Allylverbindung der allgemeinen Formel II,
CH₂=CR³CH₂-[O(CHR³)ₓ]_{y}OH . (II)
in der R³ Wasserstoff oder einen Methylrest bedeuten, x für eine ganze Zahl von 2 bis 6 und y für 0 oder eine ganze oder gebrochene Zahl bis zu 60 steht,
in einer Kondensationsreaktion zu einem offenkettigen, olefinisch ungesättigten Organohydrogensilanester der allgemeinen Formel III umsetzt,
CH₂=CR³CH₂-[O(CHR³)ₓ]_{y}O-SiH(R¹)₂ (III)
in der R¹ und R³ sowie x und y die angegebene Bedeutung haben.
(B) diesen offenkettigen Organohydrogensilanester in einer Hydrosilylierungsreaktion zu einem cyclischen Organosilanester der allgemeinen Formel IV umsetzt, 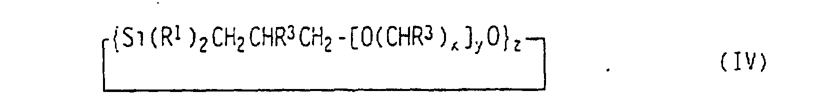 in der R¹ und R³ sowie x und y die angegebene Bedeutung haben und z eine ganze Zahl von 1 bis 6 bezeichnet.
(C) gegebenenfalls den cyclischen Organosilanester IV, sofern mindestens einer der Reste R¹ ein Halogenatom und gegebenenfalls einer der Reste R¹ ein über ein C-Atom gebundener organischer Rest R² ist, mit einem Alkohol der allgemeinen Formel R²OH, in der R² die angegebene Bedeutung hat. zu dem entsprechenden cyclischen Organyloxyorganosilanester der allgemeinen Formel V umsetzt, 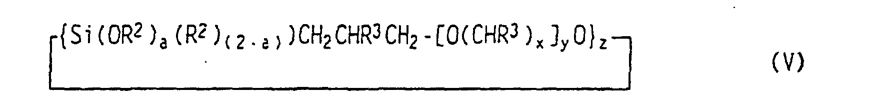 in der R² und R³ sowie x, y und z die angegebene Bedeutung haben und a für 1 oder 2 steht,
und
(D) den Organosilanester IV oder den Organyloxyorganosilanester V mit Wasser zu einem Hydrolyseprodukt der allgemeinen Formel VI,
{-Si(O-)₍ₐ₊₁₎(R²)₍₂₋ₐ₎CH₂CHR³CH₂-[O(CHR³)ₓ]_{y}OH}ₙ (VI)
in der R² und R³ sowie x, y und z die angegebene Bedeutung haben und n eine ganze Zahl von 2 bis 6 bezeichnet,
oder mit einem Alkohol der allgemeinen Formel R²OH, in der R² die angegebene Bedeutung hat, zu einem Alkoholyseprodukt der allgemeinen Formel VII,
Si(OR²)₍ₐ₊₁₎(R²)₍₂₋ₐ₎(CH₂CHR³CH₂-[O(CHR³)ₓ]_{y}OR²) (VII)
in der R² und R³ sowie a, x und y die angegebene Bedeutung haben,
solvolysiert.

2. Verfahren zur Herstellung von cyclischen Organosilanestern IV, **dadurch gekennzeichnet, daß** man
(A) ein Hydrogensilan der allgemeinen Formel I,
H-SiX(R¹)₂ , (I)
in der X einen hydrolysierbaren Rest und R¹ jeweils unabhängig einen hydrolysierbaren Rest oder einen über ein C-Atom gebundenen organischen Rest R² bedeutet,
mit einer eine Hydroxylgruppe enthaltenden Allylverbindung der allgemeinen Formel II.
CH₂=CR³CH₂-[O(CHR³)ₓ]_{y}OH , (II)
in der R³ Wasserstoff oder einen Methylrest bedeutet, x für eine ganze Zahl von 2 bis 6 und y für 0 oder eine ganze oder gebrochene Zahl bis zu 60 steht,
in einer Kondensationsreaktion zu einem offenkettigen, olefinisch ungesattigten Organohydrogensilanester der allgemeinen Formel III
CH₂=CR³CH₂-[O(CHR³)ₓ]_{y}O-SiH(R¹)₂ (III)
in der R¹ und R³ sowie x und y die angegebene Bedeutung haben,
und
(B) den offenkettigen Organohydrogensilanester III in einer Hydrosilylierungsreaktion zu einem cyclischen Organosilanester der allgemeinen Formel IV umsetzt, 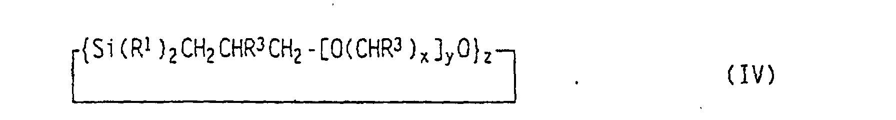 in der R¹, R³, x und y die angegebene Bedeutung haben und z eine ganze Zahl von 1 bis 6 bezeichnet.

3. Verfahren zur Herstellung von cyclischen Organyloxyorganosilanestern V, **dadurch gekennzeichnet, daß** man
(A) ein Hydrogensilan der allgemeinen Formel I,
H-SiX(R¹)₂ , (I)
in der X einen hydrolysierbaren Rest und R¹ jeweils unabhängig einen hydrolysierbaren Rest oder einen über ein C-Atom gebundenen organischen Rest R² bedeutet, mit der Maßgabe, daß mindestens einer der Reste R¹ ein Halogenatom und gegebenenfalls einer der Reste R¹ ein über ein C-Atom gebundener organischer Rest R² ist,
mit einer eine Hydroxylgruppe enthaltenden Allylverbindung der allgemeinen Formel II,
CH₂=CR³CH₂-[O(CHR³)ₓ]_{y}OH , (II)
in der R³ Wasserstoff oder einen Methylrest bedeutet. x für eine ganze Zahl von 2 bis 6 und y für 0 oder eine ganze oder gebrochene Zahl bis zu 60 steht,
in einer Kondensationsreaktion zu einem offenkettigen, olefinisch ungesättigten Organohydrogensilanester der allgemeinen Formel III
CH₂=CR³CH₂-[O(CHR³)ₓ]_{y}O-SiH(R¹)₂ (III)
in der R¹ und R³ sowie x und y die angegebene Bedeutung haben.
(B) diesen offenkettigen Organohydrogensilanester in einer Hydrosilylierungsreaktion zu einem cyclischen Organosilanester der allgemeinen Formel IV umsetzt, 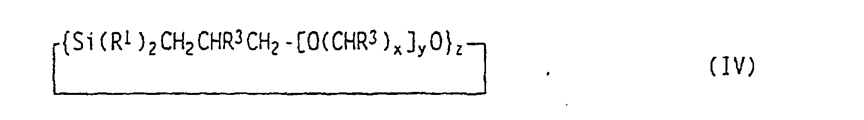 in der R¹ und R³ sowie x und y die angegebene Bedeutung haben und z eine ganze Zahl von 1 bis 6 bezeichnet,
und
(C) den cyclischen Organosilanester IV mit einem Alkohol der allgemeinen Formel R²OH, in der R² die angegebene Bedeutung hat, zu dem entsprechenden cyclischen Organyloxyorganosilanester der allgemeinen Formel V umsetzt. 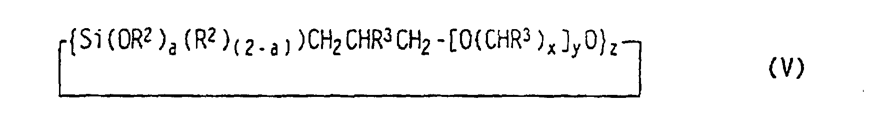 in der R² und R³ sowie x, y und z die angegebene Bedeutung haben und a für 1 oder 2 steht.

4. Verfahren nach einem der Ansprüche 1 bis 3, **dadurch gekennzeichnet, daß** X ein Halogenatom und R¹ ein Halogenatom oder einen Alkylrest mit 1 bis 6 Kohlenstoffatomen bedeutet.

5. Verfahren nach einem der Ansprüche 1 bis 4, **dadurch gekennzeichnet, daß** x für eine ganze Zahl von 1 bis 4 und y für 0 oder eine ganze oder gebrochene Zahl bis 10 steht

6. Verfahren nach einem der Ansprüche 1 bis 5, **dadurch gekennzeichnet, daß** y für eine ganze Zahl von 1 bis 4 steht.

7. Verfahren nach einem der Anspruch 1 oder 4 bis 6, **dadurch gekennzeichnet, daß** die Solvolyse eine Hydrolyse ist und das Hydrolyseprodukt je nach dem Zahlenwert von a in der allgemeinen Formel VI,
{-Si(O-)₍ₐ₊₁₎(R²)₍₂₋ₐ₎CH₂CHR³CH₂-[O(CHR³)ₓ]_{y}OH}ₙ (VI)
in der R² und R³ sowie a, x, y und n die in Anspruch 1 angegebene Bedeutung haben,
überwiegend ein Disiloxan. ein cyclisches Siloxan mit 3 bis 8 Siliciumatomen im Ring oder ein lineares oder ein vernetztes Polysiloxan ist.

8. Verfahren nach einem der Ansprüche 1 oder 4 bis 6, **dadurch gekennzeichnet, daß** die Solvolyse eine Alkoholyse ist und das überwiegend monomere Alkoholyseprodukt der allgemeinen Formel VII,
Si(OR²)₍ₐ₊₁₎(R²)₍₂₋ₐ₎CH₂CHR³CH₂-[O(CHR³)ₓ]_{y}OH (VII)
in der R² und R³ sowie a, x und y die in Anspruch 1 angegebene Bedeutung haben,
durch Zusatz eines tertiären Amins und/oder eines Alkohols stabilisiert wird.

9. Cyclischer Organosilanester der allgemeinen Formel IV, 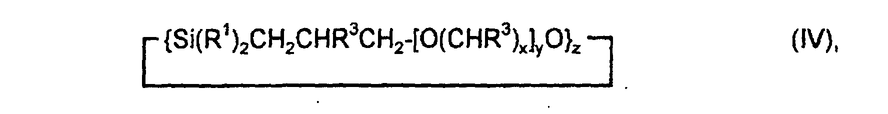 in der R¹ jeweils unabhängig einen hydrolysierbaren Rest oder einen über ein C-Atom gebundenen organischen Rest bedeutet, R³ einen Wasserstoff oder einen Methylrest darstellt, x eine ganze Zahl von 2 bis 6 darstellt, y für eine ganze oder gebrochene Zahl von 1 bis 60 steht und z eine ganze Zahl von 1 bis 6 bezeichnet.

10. Cyclische Organyloxyorganosilanester der allgemeinen Formel V, 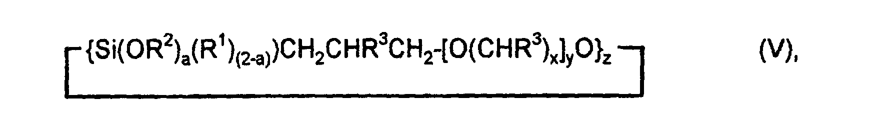 in der R¹ jeweils unabhängig einen hydrolysierbaren Rest oder einen über ein C-Atom gebundenen organischen Rest bedeutet, R² einen über ein C-Atom gebundenen organischen Rest bezeichnet, R³ einen Wasserstoff oder einen Methylrest darstellt, x für eine ganze Zahl von 2 bis 6, y für eine ganze oder gebrochene Zahl von 1 bis 60, z für eine ganze Zahl von 1 bis 6 und a für 1 oder 2 stehen.

11. Hydrolyseprodukte der cyclischen Organosilanester IV nach Anspruch 9 oder der cyclischen Organylorganosilanester V nach Anspruch 10 mit der allgemeinen Formel VI
{-Si(O-)₍ₐ₊₁₎(R²)₍₂₋ₐ₎CH₂CHR³CH₂-[O(CHR³)ₓ]_{y}OH}ₙ (VI)
in der R² und R³ sowie a, x, y und n die in Anspruch 1 angegebene Bedeutung haben.

12. Alkoholyseprodukte der Cyclischen Organosilanester IV nach Anspruch 9 oder der cyclischen Organylorganosilanester V nach Anspruch 10 mit der allgemeinen Formel VII
Si(OR²)₍ₐ₊₁₎(R²)₍₂₋ₐ₎CH₂CHR³CH₂-[O(CHR³)ₓ]_{y}OH (VII)
in der R² und R³ sowie a, x und y die in Anspruch 1 angegebene Bedeutung haben.

13. Verwendung der offenkettigen Silanester III nach Anspruch 1, Stufe A, der cyclischen Organosilanester IV nach Anspruch 9, der cyclischen Organyloxyorganosilanester V nach Anspruch 10, der Hydrolyseprodukte der cyclischen Organosilanester IV oder der cyclischen Organylorganosilanester V nach Anspruch 11 oder der Alkoholyseprodukte der cyclischen Organosilanester IV oder der cyclischen Organylorganosilanester V nach Anspruch 12 als Vernetzungs- und Haftmittel für Werkstoffe und/oder als Phasenvermittler.

14. Verwendung der cyclischen Organosilanester IV nach Anspruch 9 oder der cyclischen Organyloxyorganosilanester V nach Anspruch 10 zur Modifizierung von Estergruppen enthaltenden Polymerwerkstoffen.

## Claims

1. A process for the preparation of a cyclic silane ester or a solvolysis product thereof, **characterized in that** it comprises
(A) reacting a hydridosilane of the general formula I
H-SiX(R¹)₂ (I)
in which X is a hydrolysable radical and R¹ in each case independently is a hydrolysable radical or an organic radical R² bonded via a C atom,
with an allyl compound containing a hydroxyl group, of the general formula II
CH₂=CR³CH₂-[O(CHR³)ₓ]_{y}OH (II)
in which R³ is hydrogen or a methyl radical, x is an integer from 2 to 6 and y is 0 or an integer or fraction up to 60,
in a condensation reaction to give an open-chain, olefinically unsaturated organohydridosilane ester of the general formula III
CH₂=CR³CH₂-[O(CHR³)ₓ]_{y}O-SiH(R¹)₂ (III)
in which R¹ and R³ and x and y have the meaning given,
(B) reacting this open-chain organohydridosilane ester in a hydrosilylation reaction to give a cyclic organosilane ester of the general formula IV 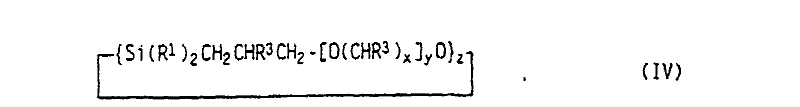 in which R¹ and R³ and x and y have the meaning given and z is an integer from 1 to 6,
(C) if appropriate reacting the cyclic organosilane ester IV, if at least one of the radicals R¹ is a halogen atom and, if applicable, one of the radicals R¹ is an organic radical R² bonded via a C atom, with an alcohol of the general formula R²OH, in which R² has the meaning given, to give the corresponding cyclic organyloxyorganosilane ester of the general formula V 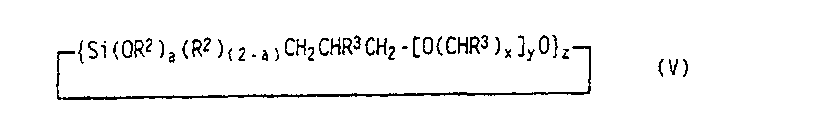 in which R² and R³ and x, y and z have the meaning given and a is 1 or 2,
and
(D) solvolysing the organosilane ester IV or the organyloxyorganosilane ester V with water to give a hydrolysis product of the general formula VI
{-Si(O-)₍ₐ₊₁₎(R²)₍₂₋ₐ₎CH₂CHR³CH₂-[O(CHR³)ₓ]_{y}OH}ₙ (VI)
in which R² and R³ and x, y and z have the meaning given and n is an integer from 2 to 6,
or with an alcohol of the general formula R²OH, in which R² has the meaning given, to give an alcoholysis product of the general formula VII
Si (OR²) ₍ₐ₊₁₎(R²) ₍₂₋ₐ₎ (CH₂CHR³CH₂-[O(CHR³)ₓ]_{y}OR²) (VIII)
in which R² and R³ and a, x and y have the meaning given.

2. A process for the preparation of a cyclic organosilane ester IV, **characterized in that** it comprises
(A) reacting a hydridosilane of the general formula I
H-SiX(R¹)₂ (I)
in which X is a hydrolysable radical and R¹ in each case independently is a hydrolysable radical or an organic radical R² bonded via a C atom,
with an allyl compound containing a hydroxyl group, of the general formula II
CH₂=CR³CH₂-[O(CHR³)ₓ]_{y}OH (II)
in which R³ is hydrogen or a methyl radical, x is an integer from 2 to 6 and y is 0 or an integer or fraction up to 60,
in a condensation reaction to give an open-chain, olefinically unsaturated organohydridosilane ester of the general formula III
CH₂=CR³CH₂-[O(CHR³)ₓ]_{y}O-SiH(R¹)₂ (III)
in which R¹ and R³ and x and y have the meaning given,
and
(B) reacting the open-chain organohydridosilane ester III in a hydrosilylation reaction to give a cyclic organosilane ester of the general formula IV 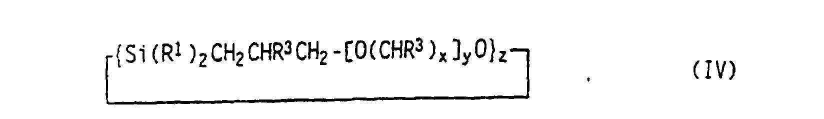 in which R¹, R³, x and y have the meaning given and z is an integer from 1 to 6.

3. A process for the preparation of a cyclic organyloxyorganosilane ester V, **characterized in that** it comprises
(A) reacting a hydridosilane of the general formula I
H-SiX(R¹)₂ (I)
in which X is a hydrolysable radical and R¹ in each case independently is a hydrolysable radical or an organic radical R² bonded via a C atom, with the proviso that at least one of the radicals R¹ is a halogen atom and, if applicable, one of the radicals R¹ is an organic radical R² bonded via a C atom,
with an allyl compound containing a hydroxyl group, of the general formula II
CH₂=CR³CH₂-[O(CHR³)ₓ]_{y}OH (II)
in which R³ is hydrogen or a methyl radical, x is an integer from *2* to 6 and y is 0 or an integer or fraction up to 60,
in a condensation reaction to give an open-chain, olefinically unsaturated organohydridosilane ester of the general formula III
CH₂=CR³CH₂-[O(CHR³)ₓ]_{y}O-SiH(R¹)₂ (III)
in which R¹ and R³ and x and y have the meaning given,
(B) reacting this open-chain organohydridosilane ester in a hydrosilylation reaction to give a cyclic organosilane ester of the general formula IV 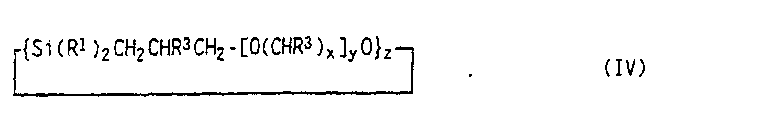 in which R¹ and R³ and x and y have the meaning given and z is an integer from 1 to 6,
and
(C) reacting the cyclic organosilane ester IV, with an alcohol of the general formula R²OH, in which R² has the meaning given, to give the corresponding cyclic organyloxyorganosilane ester of the general formula V 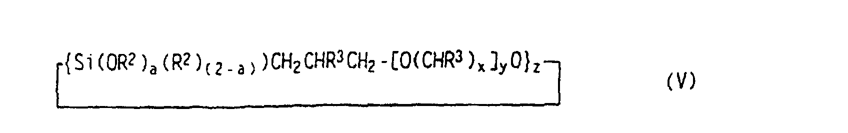 in which R² and R³ and x, y and z have the meaning given and a is 1 or 2.

4. A process according to any one of claims 1 to 3, **characterized in that** X is a halogen atom and R¹ is a halogen atom or an alkyl radical having 1 to 6 carbon atoms.

5. A process according to any one of claims 1 to 4, **characterized in that** x is an integer from 1 to 4 and y is 0 or an integer or fraction up to 10.

6. A process according to any one of claims 1 to 5, **characterized in that** y is an integer from 1 to 4.

7. A process according to any one of claims 1 or 4 to 6, **characterized in that** the solvolysis is a hydrolysis and the hydrolysis product, depending on the numerical value of a in the general formula VI
{-Si(O-)₍ₐ₊₁₎(R²)₍₂₋ₐ₎CH₂CHR³CH₂-[O(CHR³)ₓ]_{y}OH}ₙ (VI)
in which R² and R³ and a, x, y and n have the meaning given in claim 1,
is predominantly a disiloxane, a cyclic siloxane having 3 to 8 silicon atoms in the ring or a linear or a crosslinked polysiloxane.

8. A process according to any one of claims 1 or 4 to 6, **characterized in that** the solvolysis is an alcoholysis and the predominantly monomeric alcoholysis product of the general formula VII
Si(OR²)₍ₐ₊₁₎(R²)₍₂₋ₐ₎CH₂CHR³CH₂-[O(CHR³)ₓ]_{y}OH (VII)
in which R² and R³ and a, x and y have the meaning given in claim 1,
is stabilized by addition of a tertiary amine and/or an alcohol.

9. A cyclic organosilane ester of the general formula IV 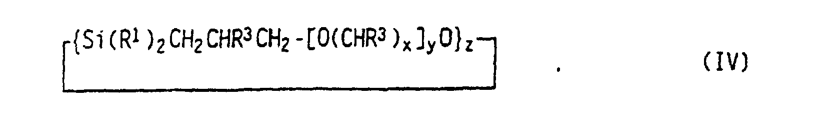 in which R¹ in each case independently is a hydrolysable radical or an organic radical bonded via a C atom, R³ is hydrogen or a methyl radical, x is an integer from 2 to 6, y is an integer or fraction from 1 to 60 and z is an integer from 1 to 6.

10. A cyclic organyloxyorganosilane ester of the general formula V 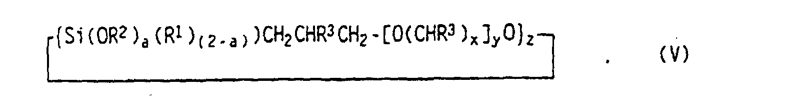 in which R¹ in each case independently is a hydrolysable radical or an organic radical bonded via a C atom, R² is an organic radical bonded via a C atom, R³ is hydrogen or a methyl radical, x is an integer from 2 to 6, y is an integer or fraction from 1 to 60, z is an integer from 1 to 6 and a is 1 or 2.

11. A hydrolysis product of a cyclic organosilane ester IV according to claim 9 or of a cyclic organylorganosilane ester V according to claim 10 with the general formula VI
{-Si(O-)₍ₐ₊₁₎(R)²₍₂₋ₐ)CH₂CHR³CH₂-[O(CHR³)ₓ]_{y}OH}ₙ (VI)
in which R² and R³ and a, x, y and n have the meaning given in claim 1.

12. An alcoholysis product of a cyclic organosilane ester IV according to claim 9 or of a cyclic organylorganosilane ester V according to claim 10 with the general formula VII
Si (OR²)₍ₐ₊₁₎(R²)₍₂₋ₐ₎CH₂CHR³CH₂-[O(CHR³)ₓ]_{y}OH (VII)
in which R² and R³ and a, x and y have the meaning given in claim 1.

13. The use of an open-chain silane ester III according to claim 1, stage A, a cyclic organosilane ester IV according to claim 9, a cyclic organyloxyorganosilane ester V according to claim 10, a hydrolysis product of a cyclic organosilane ester IV or of a cyclic organylorganosilane ester V, according to claim 11, or an alcoholysis product of a cyclic organosilane ester IV or of a cyclic organylorganosilane ester V, according to claim 12, as a crosslinking agent or adhesive for materials and/or as a phase mediator.

14. The use of a cyclic organosilane ester IV according to claim 9 or a cyclic organyloxyorganosilane ester V according to claim 10 for modification of polymer materials containing ester groups.

## Revendications

1. Procédé de préparation d'esters de silanes cycliques et de leurs produits de solvolyse,
**caractérisé en ce que**
on fait réagir
A) un hydrogénosilane de formule générale I
H-SiX(R¹)₂ (I)
dans laquelle X signifie un reste hydrolysable et R¹ respectivement d'une manière indépendante ou un reste hydrolysable ou un reste R² organique lié par l'intermédiaire d'un atome de carbone,
avec un composé allylique contenant un groupe hydroxyle de formule générale II,
CH₂=CR³CH₂-[O(CHR³)ₓ]_{y}OH (II)
dans laquelle R³ signifie de l'hydrogène ou un reste méthyle, x représente un nombre entier allant de 2 à 6, et y représente O ou un nombre entier ou fractionnaire allant jusqu'à 60,
dans une réaction de condensation en un ester d'organohydrogénosilane à chaîne ouverte non saturé oléfiniquement de formule générale (III),
CH₂=CR³CH₂-[O(CHR³)ₓ]_{y}O-SiH(R¹)₂ (III)
dans laquelle R¹ et R³ ainsi que x et y ont les significations indiquées,
B) on fait réagir cet ester d'organohydrogénosilane à chaîne ouverte dans une réaction d'hydrosilylation, en un reste d'organosilarie cyclique de formule générale (IV), 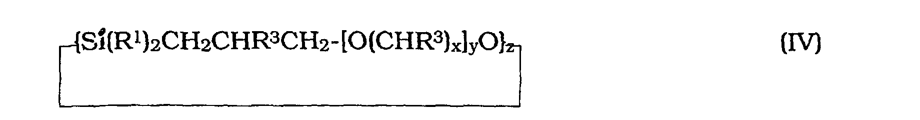 dans laquelle R¹ et R³ ainsi que x et y ont la signification indiquée, et
z désigne un nombre entier allant de 1 à 6,
C) On fait réagir le cas échéant l'ester d'organosilane cyclique (IV) pour autant qu'au moins un des restes R¹ est un reste organique R² lié par l'intermédiaire d'un atome de carbone,
avec un alcool de formule générale R²OH dans laquelle R² a la signification indiquée en un ester d'organyloxyorganosilane cyclique correspondant de formule générale V 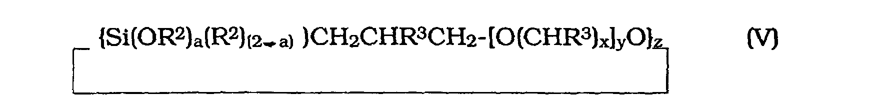 dans laquelle R² et R³ ainsi que x, y et z ont les significations indiquées, et a représente 1 ou 2, et
D) on solvolyse l'ester d'organosilane (IV) ou l'ester d'organyloxyorganosilane (V) soit avec de l'eau en un produit d'hydrolyse de formule générale (VI),
{-Si(O-)₍ₐ₊₁₎(R²)₍₂₋ₐ₎CH₂CHR³CH₂-[O(CHR³)ₓ]_{y}OH}ₙ (VI)
dans laquelle R² et R³ ainsi que x, y et z ont les significations indiquées et n désigne un nombre entier allant de 2 à 6,
soit avec un alcool de formule générale R²OH dans laquelle R² a la signification indiquée, en un produit d'alcoolyse de formule générale (VII)
Si(OR²)₍ₐ₊₁₎(R²)₍₂₋ₐ₎(CH₂CHR³CH₂-[O(CHR³)ₓ]_{y}OR²) (VII)
dans laquelle R² et R³ ainsi que a, x et y ont les significations indiquées.

2. Procédé de préparation d'esters d'organosilanes cycliques (IV),
**caractérisé en ce qu'**
A) on fait réagir un hydrogénosilane de formule générale 1
H-SiX(R¹)₂ (I)
dans laquelle X signifie un reste hydrolysable et R¹ respectivement d'une manière indépendante ou un reste hydrolysable ou un reste R² organique lié par l'intermédiaire d'un atome de carbone,
avec un composé allylique contenant un groupe hydroxyle de formule générale II,
CH₂=CR³CH₂-[O(CHR³)ₓ]_{y}OH (II)
dans laquelle R³ signifie de l'hydrogène ou un reste méthyle, x représente un nombre entier allant de 2 à 6, et y représente O ou un nombre entier ou fractionnaire allant jusqu'à 60,
dans une réaction de condensation en un ester d'organohydrogénosilane à chaîne ouverte non saturé oléfiniquement de formule générale (III),
CH₂=CR³CH₂-[O(CHR³)ₓ]_{y}O-SiH(R¹)₂ (III)
dans laquelle R¹ et R³ ainsi que x et y ont les significations indiquées,
B) on fait réagir cet ester d'organohydrogénosilane à chaîne ouverte dans une réaction d'hydrosilylation, en un reste d'organosilane cyclique de formule générale (IV), 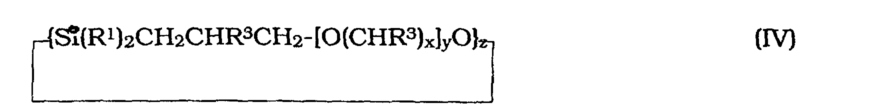
dans laquelle R¹ et R³ ainsi que x et y ont la signification indiquée, et
z désigne un nombre entier allant de 1 à 6.

3. Procédé de préparation d'esters d'organyloxyorganosilanes cycliques V,
**caractérisé en ce qu'**
on fait réagir
A) un hydrogénosilane de formule générale I,
H-SiX(R¹)₂ (I)
dans laquelle X signifie un reste hydrolysable et R¹ respectivement d'une manière indépendante un reste hydrolysable ou un reste R² organique lié par l'intermédiaire d'un atome de carbone,
avec la restriction qu'au moins un des restes R¹ est un atome d'halogène et le cas échéant un des restes R¹ est un reste organique R² lié par l'intermédiaire d'un atome de carbone,
avec un composé allylique contenant un groupe hydroxyle de formule générale II,
CH₂=CR³CH₂-[O(CHR₃)ₓ]_{y}OH (II)
dans laquelle R³ signifie de l'hydrogène ou un reste méthyle, x représente un nombre entier allant de 2 à 6, et y représente O ou un nombre entier ou fractionnaire allant jusqu'à 60,
dans une réaction de condensation en un ester d'organohydrogénosilane à chaîne ouverte non saturé oléfiniquement de formule générale (III),
CH₂=CR³CH₂-[O(CHR³)ₓ]_{y}O-SiH(R¹)₂ (III)
dans laquelle R¹ et R³ ainsi que x et y ont les significations indiquées,
B) on fait réagir cet ester d'organohydrogénosilane à chaîne ouverte dans une réaction d'hydrosilylation, en un reste d'organosilane cyclique de formule générale (IV), 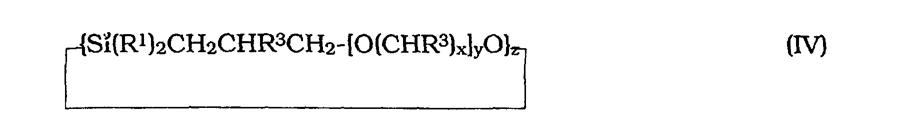 dans laquelle R¹ et R³ ainsi que x et y ont la signification indiquée, et
z désigne un nombre entier allant de 1 à 6, et
C) on fait réagir l'ester d'organosilane cyclique (IV) avec un alcool de formule générale,
R²OH
dans laquelle R² a la signification indiquée, en un ester d'organyloxyorganosilane cyclique correspondant de formule générale (V), 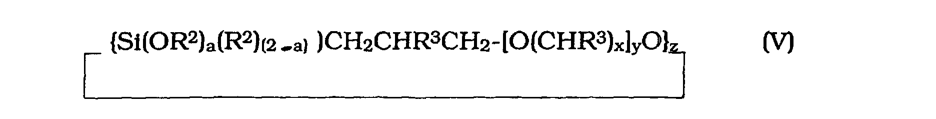 dans laquelle R² et R³ ainsi que x, y et z ont les significations indiquées et a représente 1 ou 2.

4. Procédé selon l'une quelconque des revendications 1 à 3,
**caractérisé en ce que**
X signifie un atome d'halogène et R¹ un atome d'halogène ou un reste alkyle ayant de 1 à 6 atomes de carbone.

5. Procédé selon l'une quelconque des revendications 1 à 4,
**caractérisé en ce que**
x représente un nombre entier allant de 1 à 4 et y représente O ou un nombre entier ou fractionnaire allant jusqu'à 10.

6. Procédé selon l'une quelconque des revendications 1 à 5,
**caractérisé en ce que**
y représente un nombre entier allant de 1 à 4.

7. Procédé selon l'une quelconque des revendications 1 ou 4 à 6,
**caractérisé en ce que**
la solvolyse est une hydrolyse et le produit d'hydrolyse selon la valeur numérique de a dans la formule générale VI
{-Si(O-)₍ₐ₊₁₎ (R²)₍₂₋ₐ₎CH₂CHR³CH₂-[O(CHR³)ₓ]_{y}OH}ₙ (VI)
dans laquelle R² et R³ ainsi que x, y et n ont les significations indiquées dans la revendication 1,
est d'une manière prépondérante un disiloxane, un siloxane cyclique ayant de 3 à 8 atomes de silicium dans le cycle ou un polysiloxane linéaire ou un polysiloxane réticulé.

8. Procédé selon l'une quelconque des revendications 1 ou 4 à 6,
**caractérisé en ce que**
la solvolyse est une alcoolyse et **en ce que** le produit d'alcoolyse monomère d'une manière prépondérante de formule générale VII,
Si(OR²)_{(a +1)} (R²)₍₂₋ₐ₎ (CH₂CHR³CH₂-[O(CHR³)ₓ]_{y}OR²) (VII)
dans laquelle R² et R³ ainsi que a, x et y ont les significations indiquées dans la revendication 1, est stabilisé par addition d'une amine tertiaire et/ou d'un alcool.

9. Esters d'organosilane cycliques de formule générale IV, 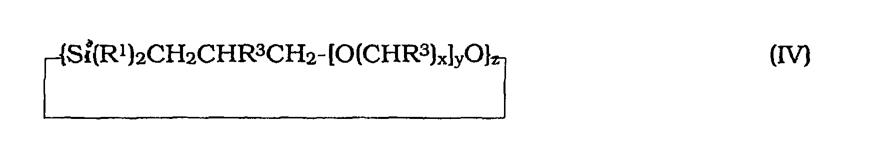 dans laquelle R¹ signifie respectivement d'une manière prépondérante un reste hydrolysable ou un reste organique lié par l'intermédiaire d'un atome de carbone, R³ représente un hydrogène ou un reste méthyle, x représente un nombre entier allant de 2 à 6, y représente un nombre entier ou fractionnaire allant de 1 à 60, et
z désigne un nombre entier allant de 1 à 6.

10. Esters d'organyloxyorganosilane cycliques de formule générale (V), 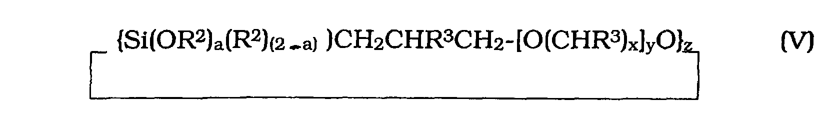 dans laquelle R¹ respectivement d'une manière indépendante signifie un reste hydrolysable ou un reste organique lié par l'intermédiaire d'un atome de carbone, R² désigne un reste organique lié par l'intermédiaire d'un atome de carbone, R³ représente un hydrogène ou un reste méthyle, x représente un nombre entier allant de 2 à 6, y représente un nombre entier ou fractionnaire allant de 1 à 60, z représente un nombre entier allant de 1 à 6 et a représente 1 ou 2.

11. Produit d'hydrolyse d'esters d'organosilane cyclique IV selon la revendication 9 ou d'esters d'organyloxyorganosilane cyclique selon la revendication 10 ayant la formule générale VI,
{-Si(O-)₍ₐ₊₁₎(R²)₍₂₋ₐ₎CH₂CHR³CH₂-[O(CHR³]ₓ]_{y}OH}ₙ (VI)
dans laquelle R² et R³ ainsi que x, y et n ont les significations indiquées dans la revendication 1.

12. Produits d'alcoolyse des esters d'organosilane cycliques IV selon la revendication 9 ou des esters d'organylorganosilane cycliques V selon la revendication 10 ayant la formule générale VII,
Si(OR²)₍ₐ₊₁₎(R²)₍₂₋ₐ₎(CH₂CHR³CH₂-[O(CHR³)ₓ]_{y}OR²) (VII)
dans laquelle R² et R³ ainsi que a, x et y ont les significations indiquées à la revendication 1.

13. Utilisation des esters de silane à chaîne ouverte (III) selon la revendication 1, stade A, des esters d'organosilane cyclique IV selon la revendication 9 des esters d'organyloxyorganosilane V selon la revendication 10, des produits d'hydrolyse des esters d'organosilane cyclique IV ou des esters d'organylorganosilane cycliques V selon la revendication 11, ou des produits d'alcoolyse des esters d'organosilane cyclique IV ou des esters d'organylorganosilane cyclique V selon la revendication 12, en tant qu'agent de réticulation et d'adhésion pour des matériaux et/ou en tant qu'intermédiaire de phases.

14. Utilisation des esters d'organosilane cycliques IV selon la revendication 9 ou des esters d'organyloxyorganosilane cycliques V selon la revendication 10, en vue de modifier des matériaux polymères contenant des groupes ester.
